Europäisches Patentamt

European Patent Office

Office européen des brevets

(19)

(11) **EP 0 503 283 B1**

(12) **EUROPÄISCHE PATENTSCHRIFT**

(45) Veröffentlichungstag und Bekanntmachung des Hinweises auf die Patenterteilung:
**24.04.1996   Patentblatt 1996/17**

(51) Int Cl.[6]: **H04L 12/56**, H04Q 3/68

(21) Anmeldenummer: **92102213.3**

(22) Anmeldetag: **10.02.1992**

(54) **Zweistufige, zumindest gedoppelte ATM-Umkehr-Koppelanordnung mit (2nx2n)-Koppelvielfachen**

A two-stage, at least duplicated, folded ATM-self-routing arrangement with (2nx2n)-coupling multiples

Dispositif de couplage à rebroussement à auto-acheminement à deux étages avec au moins une structure dédoublée et avec (2nx2n)-multiples de couplage

(84) Benannte Vertragsstaaten:
**AT BE CH DE ES FR GB IT LI NL SE**

(30) Priorität: **14.03.1991   EP 91103977**

(43) Veröffentlichungstag der Anmeldung:
**16.09.1992   Patentblatt 1992/38**

(73) Patentinhaber: **SIEMENS AKTIENGESELLSCHAFT
D-80333 München (DE)**

(72) Erfinder: **Göldner, Ernst-Heinrich, Dr.
W-8000 München 90 (DE)**

(56) Entgegenhaltungen:
**EP-A- 0 384 961**

- **INTERNATIONAL SWITCHING SYMPOSIUM 1990, STOCKHOLM, SE Bd. 5, 28. Mai 1990, Seiten 111 - 118; DE PRYCKER ET AL.: 'An ATM switching architecture with intrinsic multicast capabilities for the Belgian Broadband experiment'**
- **ELECTRONICS LETTERS. Bd. 26, Nr. 16, August 1990, ENAGE GB Seiten 1286 - 1287; H. OBARA ET AL.: 'Self-Routing Fast Packet Switching with in service modulator Growth'**
- **IEEE INFOCOM '90 , SAN FRANSISCO , CA, US; WASHINGTON, US Seiten 668 - 676; S. LIEW ET AL.: 'Performance Analysis of Asymmetric Packet Switch Modules with Channel Grouping'**

**Beschreibung**

In neueren Enwicklungen der Fernmeldetechnik - und hier in der Entwicklung diensteintegrierender Breitbandnetze (B-ISDN)- spielt der auf asynchroner Zeitmultiplextechnik basierende Asynchrone Transfer-Modus (ATM) eine wesentliche Rolle, demzufolge die Signalübertragung in einem Bitstrom vor sich geht, der in - jeweils aus Kopf und Nutzinformationsteil bestehende - Zellen konstanter Länge von z.B. 53 Oktetts unterteilt ist, die je nach Bedarf mit paketierten Nachrichten belegt werden; ist gerade keine Nutzinformation zu übermitteln, so werden spezielle Leerzellen übertragen. In ATM-Vermittlungsstellen werden virtuelle Verbindungen aufgebaut, d.h. Verbindungen, die nur dann einen Wegeabschnitt tatsächlich benutzen, wenn über diesen tatsächlich ein Nachrichtenpaket (Block) zu übermitteln ist, wobei jedes Paket in seinem Kopf u.a. eine z.B. 2 Oktetts umfassende Adresse zur eindeutigen Zuordnung des Pakets zu einer bestimmten virtuellen Verbindung enthält. Dabei kann jedes Paket am Eingang zur Koppelanordnung nach Maßgabe der jeweiligen Wahlinformation die komplette Information für seinen Weg durch die Koppelanordnung erhalten; mit Hilfe dieser Information schalten die Koppelelemente dann das Paket auf dem festgelegten Weg selbst durch (self-routing network) (siehe z.B. telcom report 11(1988)6, 210...213).

Als Koppelanordnung kann dabei eine zweistufige Umkehr-Koppelanordnung mit (32x32)-Koppelvielfachen vorgesehen sein, die ihrerseits jeweils aus vier mit (16x8)-Koppelelementen gebildeten Koppelpyramiden gebildet sein können (siehe z.B. ISS'90 Proceedings Vol.1, Paper A2.3, Fig.10).

Da Vermittlungseinrichtungen einen praktisch unterbrechungsfreien Vermittlungsbetrieb gewährleisten müssen, wird man mindestens zwei redundante Koppelebenen vorsehen, d.h. man wird die Koppelanordnung doppeln (siehe z.B. EP-A1-0 384 936).

Bei der Einrichtung von Vermittlungsstellen ist es nun vielfach so, daß - bei zunächst begrenzter Teilnehmeranzahl - zunächst noch keine voll ausgebaute Koppelanordnung benötigt wird, daß vielmehr zunächst eine nur teilausgebaute Koppelanordnung genügt, die dann später zu einer vollausgebauten Koppelanordnung erweitert werden kann. Um eine solche Erweiterung ohne Betriebsunterbrechung vornehmen zu können, sieht man jedoch in der Regel bei einer zweistufigen Umkehr-Koppelanordnung auch bei deren Teilausbau bereits von vornherein eine vollausgebaute zweite (Umkehr-)Koppelstufe vor; zur Erweiterung werden dann lediglich Koppelvielfache in der ersten Koppelstufe bis zu deren Vollausbau hinzugefügt und über entsprechende Zwischenleitungen mit den Koppelvielfachen der zweiten (Umkehr-)Koppelstufe verbunden. Die schon bei einem Teilausbau der Koppelanordnung vorgesehenen, aber noch nicht benötigten Koppelvielfache der zweiten (Umkehr-)Koppelstufe stellen bis dahin eine ungenutzte Vorleistung dar.

Die Erfindung zeigt nun einen Weg zu einer zweistufigen gedoppelten ATM-Umkehr-Koppelanordnung mit (2nx2n)-Koppelvielfachen voller Erreichbarkeit, die ohne Betriebsunterbrechung auch ohne eine derartige Vorleistung erweitert werden kann.

Die Erfindung betrifft eine zweistufige, zumindest gedoppelte ATM-self-routing-Umkehr-Koppelanordnung mit (2nx2n)-Koppelvielfachen, in der jedes Koppelvielfach der bei Vollausbau der Koppelanordnung a Koppelvielfache umfassenden ersten Koppelstufe mit p Ein-/Ausgangsports und mit z Duplexzwischenleitungen (mit $p + z = 2n$) und jedes Koppelvielfach der zweiten Koppelstufe mit 2n Duplexzwischenleitungen beschaltbar ist, wobei jedes Koppelvielfach der bei Vollausbau der Koppel anordnung b Koppelvielfache umfassenden zweiten Koppelstufe über wenigstens eine Duplexzwischenleitung mit jedem Koppelvielfach der ersten Koppelstufe verbunden ist; diese Koppelanordnung ist erfindungsgemäß dadurch gekennzeichnet, daß bei Beschaltung jedes Koppelvielfachs der zweiten Koppelstufe mit $2^k$ Gruppen von Duplexzwischenleitungen (mit $k = ...,2,1,0$) jedes Koppelvielfach der zweiten Koppelstufe mit jedem Koppelvielfach der ersten Koppelstufe über jeweils wenigstens eine Duplexzwischenleitung jeder dieser $2^k$ Gruppen von Duplexzwischenleitungen verbunden ist, daß bei Teilausbau der Koppelanordnung die zweite Koppelstufe lediglich $\frac{b}{t}$ Koppelvielfache (mit $t = 2^j$ und $j = ..., 2, 1$) aufweist, die mit jedem von maximal $\frac{a}{t}$ Koppelvielfachen der ersten Koppelstufe jeweils über t Gruppen von Duplexzwischenleitungen verbunden sind, von denen bei einer Erweiterung der Koppelanordnung auf $\frac{b}{e}$ Koppelvielfache in der zweiten Koppelstufe und maximal $\frac{a}{e}$ Koppelvielfache in der ersten Koppelstufe zwischen den zuvor vorhandenen Koppelvielfachen jeweils lediglich e Gruppen von Duplexzwischenleitungen (mit $e = 2^i$ und $i = ...,2,1,0$; $i<j$) verbleiben, die durch die zuvor vorhandenen Koppelvielfache der zweiten Koppelstufe mit hinzukommenden Koppelvielfachen der ersten Koppelstufe verbindende Duplexzwischenleitungen aufgefüllt werden, und die übrigen t-e Gruppen die hinzugefügten Koppelvielfache der zweiten Koppelstufe mit den zuvor vorhandenen Koppelvielfachen der ersten Koppelstufe ebenfalls jeweils über e Gruppen von Duplexzwischenleitungen verbinden, deren Anschlußlagen in den durch sie miteinander verbundenen Koppelvielfachen den Anschlußlagen der bei der Erweiterung nicht zwischen zuvor vorhandenen Koppelvielfachen verbleibenden Duplexzwischenleitungen in den durch diese im vorherigen Teilausbauzustand miteinander verbundenen Koppelvielfachen gleich sind und die in entsprechender Weise durch die hinzugefügten Koppelvielfache der zweiten Koppelstufe mit hinzukommenden Koppelvielfachen der ersten Koppelstufe verbindende Duplexzwischenleitungen aufgefüllt werden,

und daß in jedem Koppelvielfach der zweiten Koppelstufe zumindest für jede bei einer Erweiterung der Koppelanordnung andauernde Verbindung nur Duplexzwischenleitungen einundderselben Gruppe von Duplexzwischenleitungen belegt werden.

Die Erfindung bringt den Vorteil mit sich, bei einem Teilausbau der Koppelanordnung auch die zweite (Umkehr-) Koppelstufe nicht von vornherein voll ausbauen zu müssen und dennoch eine Erweiterung (durch Nachrüsten sowohl der ersten Koppelstufe als auch der zweiten Koppelstufe) bei unveränderten, für beide (Redundanz-) Ebenen der gedoppelten Koppelanordnung identischen Self-Routing-Headern ohne Betriebsunterbrechung und damit ohne Verlust gerade bestehender Verbindungen vornehmen zu können, indem in weiterer Ausgestaltung der Erfindung zunächst die eine (Redundanz-)Ebene der gedoppelten Koppelanordnung außer Betrieb genommen und durch Hinzufügen von $\frac{b}{e}$ - $\frac{b}{t}$ Koppelvielfachen in der zweiten Koppelstufe und Verbinden jedes hinzugefügten Koppelvielfachs der zweiten Koppelstufe mit jedem Koppelvielfach der ersten Koppelstufe über jeweils wenigstens eine Duplexzwischenleitung wenigstens einer Gruppe von Duplexzwischenleitungen,

deren Anschlußlagen in den durch sie miteinander verbundenen Koppelvielfachen den Anschlußlagen der bei der Erweiterung nicht zwischen zuvor vorhandenen Koppelvielfachen verbleibenden Duplexzwischenleitungen in den durch diese im vorherigen Teilausbauzustand miteinander verbundenen Koppelvielfachen gleich sind,

erweitert wird und nach ihrer Wiederinbetriebnahme die gleichen Vorgänge bei der (den) anderen (Redundanz-)Ebene (n) der Koppelanordnung durchgeführt werden.

Weitere Besonderheiten der Erfindung werden aus der nachfolgenden näheren Erläuterung der Erfindung anhand der Zeichnungen ersichtlich. Dabei zeigen

FIG 1, FIG 2 und FIG 3    ein Ausführungsbeispiel für eine zweistufige ATM-Umkehr-Koppelanordnung im Zustand eines Teilausbaus (FIG 1) und nach einer Erweiterung (FIG 2 und FIG 3);

FIG 4, FIG 5 und FIG 6    zeigen weitere derartige Koppelanordnungen unterschiedlichen Ausbauzustands.

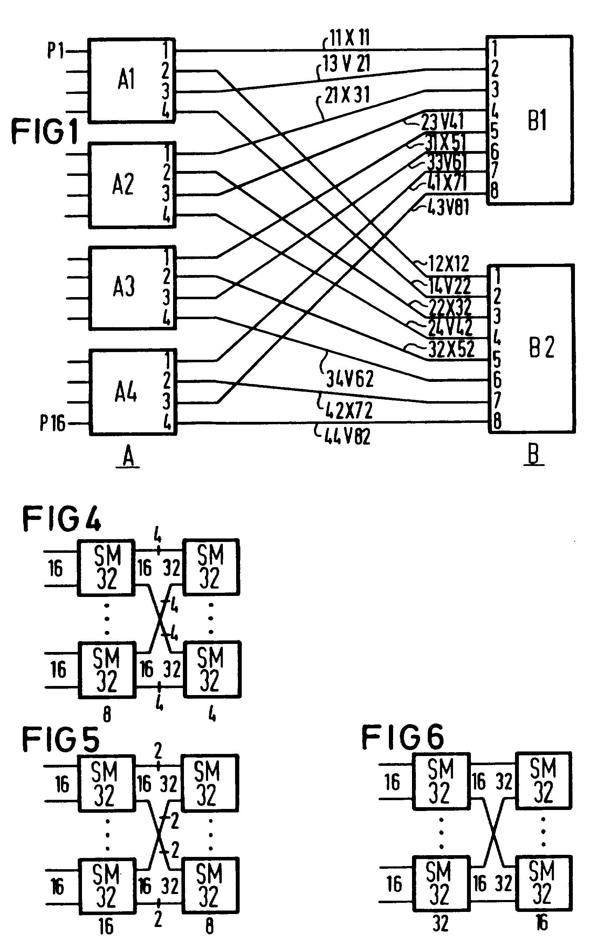

Die in FIG 1 skizzierte ATM-Umkehr-Koppelanordnung weist eine im Teilausbauzustand mit $\frac{a}{t}$ Koppelvielfachen (mit $t = 2^j$ und $j = ..., 2, 1$), im Beispiel mit $\frac{a}{t} = \frac{a}{2} = 4$ Koppelvielfachen A1, A2, A3, A4, bestückte erste Koppelstufe A und eine mit $\frac{b}{t}$ Koppelvielfachen, im Beispiel mit $\frac{b}{t} = \frac{b}{2} = 2$ Koppelvielfachen B1, B2, bestückte zweite Koppelstufe B auf. Die Koppelvielfache sind dabei der besseren Übersichtlichkeit halber als (8x8)-Koppelvielfache dargestellt; in der Praxis können beispielsweise (32x32)-Koppelvielfache mit jeweils 32 Ein-/Ausgängen vorgesehen sein, die als sog. SM32-Module aus vier mit sog. (16x8)-Koppelelementen gebildeten Koppelpyramiden gebildet sein können, wie dies z.B. aus ISS'90 Proceedings Vol.I, p.105...110, Figure 10, bekannt ist. Jedes Koppelvielfach A1,...,A4 der A-Koppelstufe A ist gemäß FIG 1 mit $p = 4$ bidirektionalen Ein-/Ausgangsports und mit $z = 4$ Duplexzwischenleitungen beschaltet; jedes Koppelvielfach B1 und B2 der B-Koppelstufe B ist gemäß FIG 1 mit $2^k$ Gruppen von Duplexzwischenleitungen (mit $k = ..., 2, 1, 0$) beschaltet, im Beispiel mit $2^k = 2^l = 2$ Gruppen (X und V) von Duplexzwischenleitungen 11X11, 21X31, 31X51, 41X71; 13V21, 23V41, 33V61, 43V81; bzw. 12X12, 22X32, 32X52, 42X72; 14V22, 24V42, 34V62, 44V82. Dabei ist jedes Koppelvielfach (z.B. B1) der B-Koppelstufe B mit jedem Koppelvielfach (z.B. A1) der A-Koppelstufe A über jeweils wenigstens eine Duplexzwischenleitung (im Beispiel 11X11 und 13V21) jeder von $t = 2^l = 2$ Gruppen (X und V) von Duplexzwischenleitungen verbunden, wobei der besseren Übersichtlichkeit halber in der in FIG 1 skizzierten Koppelanordnung jedes Koppelvielfach der B-Koppelstufe B mit jedem Koppelvielfach der A-Koppelstufe A über jeweils gerade eine Duplexzwischenleitung (11X11 und 13V21) jeder Gruppe (X und V) von Duplexzwischenleitungen verbunden ist.

Es sei bemerkt, daß FIG 1 nur die eine (Redundanz-)Ebene einer zwei oder mehrerer solcher paralleler Ebenen aufweisenden, d.h. gedoppelten oder mehrfach redundanten Koppelanordnung zeigt, deren einzelne (Redundanz-) Ebenen jeweils den vollen Verkehr tragen können und jeweils ohne Betriebsunterbrechung ab- und eingeschaltet werden können; von einer Zubringerleitung her zugeführte Nachrichtenpakete (ATM-Zellen), denen dabei jeweils vor der Koppelanordnung die volle Wegeinformation zugefügt wurde, können dabei nach ihrer entsprechenden Duplizierung bzw. Vermehrfachung über die zueinander parallelen Koppelanordnungs-Ebenen zu der für die jeweilige virtuelle Verbindung in Frage kommenden Abnehmerleitung hin übertragen und dort wieder auf jeweils eine ATM-Zelle zurückgeführt werden, wie dies an sich (aus EP-A1-0 384 936) bekannt ist und daher hier nicht näher erläutert zu werden braucht. Dazu sei besonders bemerkt, daß bei der Wegesuche in der Koppelanordnungs-(Redundanz-)Ebene für jede Verbindung zweier Ein-/Ausgänge (Ports), beispielsweise der Ports P1 und P16, im jeweiligen Koppelvielfach der B-Koppelstufe B, beispielsweise im Koppelvielfach B1, ggf. nur Duplexzwischenleitungen einundderselben Gruppe von Duplexzwischenleitungen belegt werden, im Beispiel die Duplexzwischenleitungen 11X11 und 41X71 (oder die Duplexzwischenleitungen 13V21 und 43V81).

Eine Erweiterung der in FIG 1 skizzierten Koppelanordnung ist dann erforderlich, wenn alle bidirektionalen Ports P1, ..., P16 der A-Koppelstufe A beschaltet sind und ein weiterer Ausbau gefordert wird. Die Erfindung ermöglicht nun eine Ver($2^{j-i}$)fachung mit $j = ...,2,1$ und $i = ...,1,0$; $i<j$; der Koppelvielfache der B-Koppelstufe B, d.h. eine - ggf. auch mehrfache - Verdoppelung der Koppelvielfach-Anzahl, bei gleichzeitiger - ggf. auch mehrfacher - Halbierung der Anzahl der Duplexzwischenleitungs-Gruppen und Auffüllung der Duplexzwischenleitungs-Gruppen zwischen A-Koppelstufe und B-Koppelstufe, wonach die A-Koppelstufe dem aktuellen Bedarf entsprechend nachgerüstet werden kann:

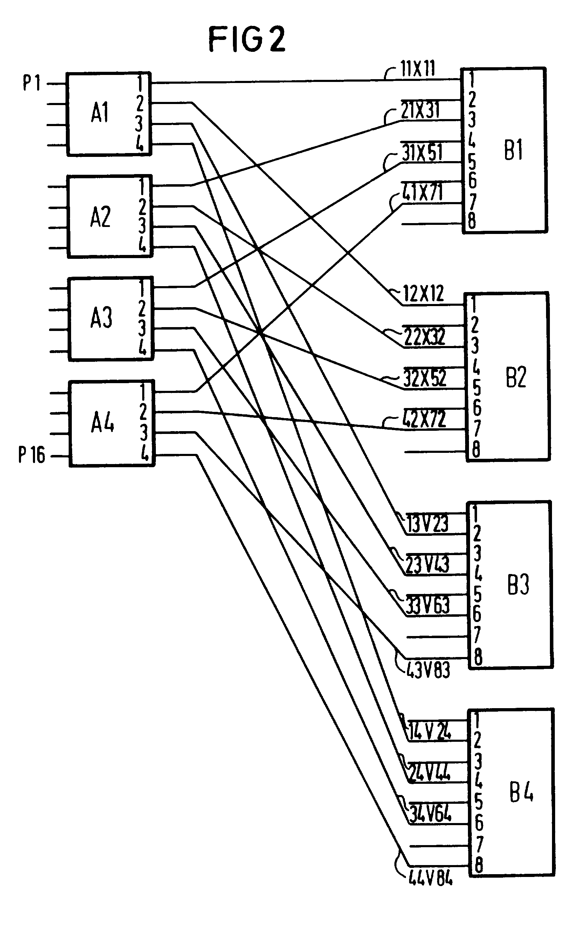

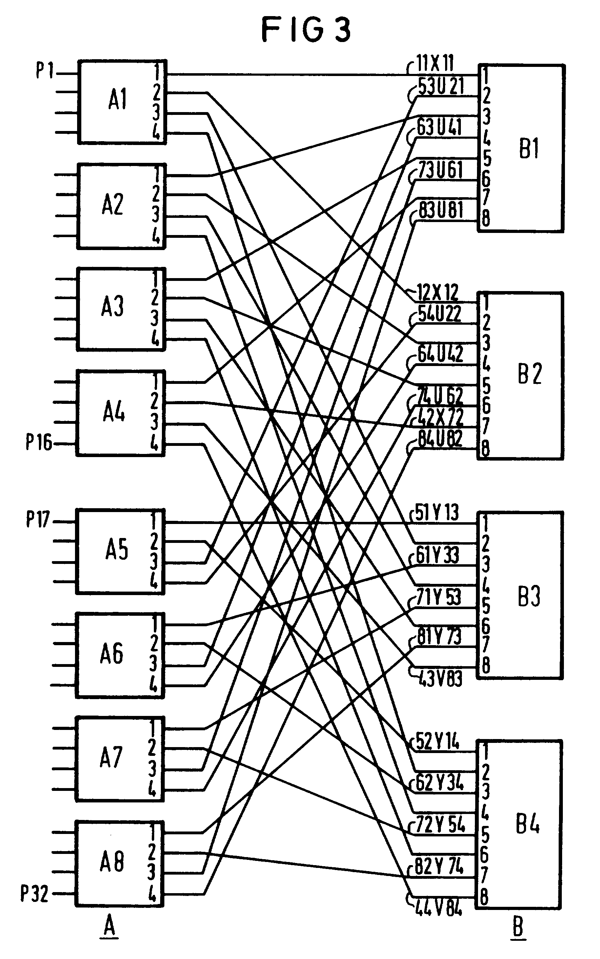

Bei einer Erweiterung der Koppelanordnung von im Beispiel gemäß FIG 1 sechzehn Ports P1,...,P16 auf im Beispiel gemäß FIG 3 maximal zweiunddreissig Ports P1,...,P16, P17,...,P32 können zu den zunächst vier Koppelvielfachen A1,...,A4 (in FIG 1 und FIG 2) der A-Koppelstufe maximal vier weitere Koppelvielfache A5,...,A8 (in FIG 2) hinzukommen, nachdem zuvor entsprechende Koppelvielfache B3, B4 (in FIG 2 und FIG 3) in der B-Koppelstufe B hinzugefügt worden sind.

Waren zuvor, beim Teilausbau der Koppelanordnung gemäß FIG 1, die $\frac{b}{t}$ = 2 Koppelvielfache B1, B2 der B-Koppelstufe mit jedem der $\frac{a}{t}$ = 4 Koppelvielfache A1,...,A4 der A-Koppelstufe jeweils über t = 2 Gruppen (X, V) von Duplexzwischenleitungen verbunden, so verbleiben von diesen bei einer Erweiterung der Koppelanordnung auf $\frac{b}{e}$ Koppelvielfache in der B-Koppelstufe (mit e = $2^i$ und i = ..., 2, 1, 0; i<j) und maximal $\frac{a}{e}$ Koppelvielfache in der A-Koppelstufe zwischen den zuvor vorhandenen Koppelvielfachen lediglich e Gruppen von Duplexzwischenleitungen, die durch Duplexzwischenleitungen aufzufüllen sind, welche die zuvor vorhandenen Koppelvielfache B1, B2 der B-Koppelstufe mit hinzukommenden Koppelvielfachen der A-Koppelstufe verbinden. In dem Ausführungsbeispiel gemäß FIG 3 ist e = 1, (was zugleich bedeutet, daß die Koppelanordnung ihren Vollausbau erreicht,) und es verbleibt somit zwischen den zuvor vorhandenen Koppelvielfachen A1,...,A4; B1, B2 lediglich 1 Gruppe (X+U) von Duplexzwischenleitungen 11X11, ..., 42X72, die dabei durch Duplexzwischenleitungen 53U21, 63U41, 73U61, 83U81 und 54U22, 64U42, 74U62, 84U82 aufgefüllt ist, welche die zuvor vorhandenen Koppelvielfache B1, B2 der B-Koppelstufe mit gemäß FIG 3 hinzukommenden Koppelvielfachen A5,...A8 der A-Koppelstufe verbinden.

Weitere t-e Duplexzwischenleitungs-Gruppen verbinden die hinzugefügten Koppelvielfache der B-Koppelstufe mit jedem Koppelvielfach der A-Koppelstufe ebenfalls jeweils über e Gruppen von Duplexzwischenleitungen, deren Anschlußlagen dabei in den durch sie miteinander verbundenen Koppelvielfachen gleich den Anschlußlagen sind, die die bei der Erweiterung nicht zwischen zuvor vorhandenen Koppelvielfachen verbleibenden Duplexzwischenleitungen in den durch diese im vorherigen Teilausbauzustand miteinander verbundenen Koppelvielfachen hatten. In dem Ausführungsbeispiel gemäß FIG 2 verbinden die Duplexzwischenleitungen 13V23, 23V43, 33V63, 43V83 und 14V24, 24V44, 34V64, 44V84 die hinzugefügten Koppelvielfache B3 und B4 der B-Koppelstufe mit den schon zuvor vorhandenen Koppelvielfachen A1,...,A4 der A-Koppelstufe, wobei die Anschlußlagen in den durch diese Duplexzwischenleitungen miteinander verbundenen Koppelvielfachen, beispielsweise für die Duplexzwischenleitung 13V23 die Anschlußlage 3 im Koppelvielfach A1 und die Anschlußlage 2 im Koppelvielfach B3, gleich den Anschlußlagen 3 (im Koppelvielfach A1) und 2 (im Koppelvielfach B1) sind, die die entsprechende Duplexzwischenleitung (im Beispiel die Duplexzwischenleitung 13V21) in den durch diese im vorherigen Teilausbauzustand miteinander verbundenen Koppelvielfachen, im Beispiel den Koppelvielfachen A1 und B1, hatte. Die Wegeinformation (self-routing-header) der einzelnen Zellen ist dabei für die einzelnen Duplexzwischenleitungen ..V.. vor und nach der Erweiterung jeweils die gleiche.

Wenn gemäß FIG 3 in der A-Koppelstufe Koppelvielfache A5,...,A8 hinzukommen, ist die die Duplexzwischenleitungen ..V.. enthaltende Duplexzwischenleitungs-Gruppe (V+Y) in entsprechender Weise durch die gemäß FIG 2 hinzugefügten Koppelvielfache der B-Koppelstufe mit den gemäß FIG 3 hinzukommenden Koppelvielfachen der A-Koppelstufe verbindende Duplexzwischenleitungen aufzufüllen; im Ausführungsbeispiel gemäß FIG 3 sind dies die Duplexzwischenleitungen 51Y13, 61Y33, 71Y53, 81Y73 und 52Y14, 62Y32, 72Y54, 82Y74.

Bei einer Koppelanordnung mit einer Mehrzahl von (Redundanz-) Ebenen, von denen eine in den Zeichnungen FIG 1, FIG 2 und FIG 3 angedeutet ist, verläuft eine Erweiterung dann in folgender Weise: Ausgehend davon, daß bei der im übrigen in an sich bekannter Weise vorzunehmenden Wegesuche in jedem Koppelvielfach der B-Koppelstufe zumindest für jede zeitlich in die Erweiterungsphase hineinreichende Verbindung, d.h. für semipermanente Verbindungen von vornherein und für die übrigen Verbindungen zumindest rechtzeitig vor dem Eintritt in die Erweiterungsphase, nur Duplexzwischenleitungen einundderselben Gruppe (X oder V) von Zwischenleitungen (11X11,..., 41X71; 12X12,..., 42X72 in FIG 1 und FIG 2; oder 13V21,...,43V81; 14V22,...,44V82 in FIG 1 und 13V23,..., 43V83; 14V24,...44V84 in FIG 2) belegt werden, wird zunächst eine (Redundanz-)Ebene der Koppelanordnung außer Betrieb genommen, während die andere(n) Ebene(n) ohne eine Betriebsunterbrechung weiterarbeiten kann (können). In der abgeschalteten (Redundanz-)Ebene können dann die zusätzlichen Koppelvielfache (B3, B4 in FIG 2) der B-Koppelstufe B eingebaut und die Zwischenleitungsverkabelung rekonfiguriert werden, wie dies prinzipiell aus FIG 2 ersichtlich ist. In dem hier gezeigten Beispiel werden die Duplexzwischenleitungen der Gruppe X zwischen den Koppelvielfachen A1,A2 der A-Koppelstufe und den Koppelvielfachen B1, B2 der B-Koppelstufe beibehalten, während die Duplexzwischenleitungen der Gruppe V nunmehr die Koppelvielfache A1, A2 der A-Koppelstufe mit den hinzugekommenen Koppelvielfachen B3, B4 der B-Koppelstufe verbinden, wobei die Anschlußlagen in den durch diese Duplexzwischenleitungen miteinander verbundenen Koppelvielfachen, beispielsweise für die Duplexzwischenleitung 13V23 die Anschlußlage 3 im Koppelvielfach A1 und die Anschlußlage 2 im Koppelvielfach B3, gleich den Anschlußlagen 3 (im Koppelvielfach A1) und 2 (im Koppelvielfach B1) sind, die die entsprechende Duplexzwischenleitung (im Beispiel die Duplexzwischenleitung 13V21) in den durch diese im vorherigen Teilausbauzustand miteinander verbundenen Koppelvielfachen, im Beispiel den Koppelvielfachen A1 und B1, hatte. Danach - und nach einem ggf. durchgeführten Off-Line-Test - kann die erweiterte (Redundanz-)Ebene der Koppelanordnung wieder in Betrieb genommen werden, und die gleiche Prozedur kann für die zweite (und danach für jede etwaige weitere) Redundanz-Ebene durchgeführt werden.

Da sich die routing-Informationen für die einzelnen Nutzverbindungen mit der neuen Konfiguration nicht ändern, sind aus der Sicht der vermittlungsseitigen Steuerung teilausgebaute und erweiterte Konfiguration gleich für alle Koppelvielfache (A1,...,A4) der A-Koppelstufe, die schon vor der Erweiterung vorhanden waren, und es können während der Erweiterungsphase auch Verbindungen auf- und abgebaut werden.

Abschließend sei noch folgendes bemerkt. Im vorstehenden wird die Erfindung anhand der FIG 1 bis FIG 3 am Beispiel einer Erweiterung der Koppelanordnung auf das Doppelte erläutert, womit im Ausführungsbeispiel zugleich der Vollausbau der Koppelanordnung erreicht wird. In entsprechender Weise kann eine Koppelanordnung aber auch von einem niedrigeren Teilausbauzustand aus zunächst in einen höheren Teilausbauzustand erweitert werden, wie dies beispielsweise bei einem Ausbau der in FIG 4 skizzierten Koppelanordnung mit maximal 128 bidirektionalen Ports auf die in FIG 5 skizzierte Koppelanordnung mit maximal 256 bidirektionalen Ports der Fall ist, oder es kann die Koppelanordnung auch gleich um mehr als eine 2er-Potenz erweitert werden, wie dies bei einem Ausbau der in FIG 4 skizzierten Koppelanordnung auf die in FIG 6 skizzierte Koppelanordnung mit maximal 528 bidirektionalen Ports der Fall ist.

**Patentansprüche**

1.  Zweistufige, zumindest gedoppelte ATM-self-routing-Umkehr-Koppelanordnung mit (2nx2n)-Koppelvielfachen, in der jedes Koppelvielfach (A1,...) der bei Vollausbau der Koppelanordnung a Koppelvielfache umfassenden ersten Koppelstufe (A) mit p Ein-/Ausgangsports und mit z Duplexzwischenleitungen (mit $p + z = 2n$) und jedes Koppelvielfach (B1,...) der zweiten Koppelstufe (B) mit 2n Duplexzwischenleitungen beschaltbar ist,

    wobei jedes Koppelvielfach (B1,...) der bei Vollausbau der Koppelanordnung b Koppelvielfache umfassenden zweiten Koppelstufe (B) über wenigstens eine Duplexzwischenleitung (11X11,...) mit jedem Koppelvielfach (A1,...) der ersten Koppelstufe (A) verbunden ist,

    **dadurch gekennzeichnet,**

    daß bei Beschaltung jedes Koppelvielfachs (B1,...) der zweiten Koppelstufe (B) mit $2^k$ Gruppen (X;V) von Duplexzwischenleitungen (11X11,...) (mit $k = ...,2,1,0$) jedes Koppelvielfach (B1,...) der zweiten Koppelstufe (B) mit jedem Koppelvielfach (A1,..) der ersten Koppelstufe (A) über jeweils wenigstens eine Duplexzwischenleitung (11X11; 13V21) jeder dieser $2^k$ Gruppen (X;V) von

    Duplexzwischenleitungen verbunden ist, daß bei Teilausbau der Koppelanordnung die zweite Koppelstufe (B) lediglich $\frac{b}{t}$ Koppelvielfache (B1;B2) (mit $t = 2^j$ und $j = ...,2,1$) aufweist, die mit jedem von maximal $\frac{a}{t}$ Koppelvielfachen (A1,... A4) der ersten Koppelstufe (A) jeweils über t Gruppen (X;V) von Duplexzwischenleitungen verbunden sind, von denen bei einer Erweiterung der Koppelanordnung auf $\frac{b}{e}$ Koppelvielfache (B1,...,B4) in der zweiten Koppelstufe (B) und maximal $\frac{a}{e}$ Koppelvielfache (A1,...A8) in der ersten Koppelstufe (A)

    zwischen den zuvor vorhandenen Koppelvielfachen (A1,...,A4; B1,B2) jeweils lediglich e Gruppen (X+U) von Duplexzwischenleitungen (mit $e = 2^i$ und $i = ...,2,1,0$; $i<j$) verbleiben, die durch die zuvor vorhandenen Koppelvielfache (B1, B2) der zweiten Koppelstufe (B) mit hinzukommenden Koppelvielfachen (A5,...,A8) der ersten Koppelstufe (A) verbindende Duplexzwischenleitungen (..U.1,..U.2) aufgefüllt werden,

    und weitere t-e Gruppen (V+Y) die hinzugefügten Koppelvielfache (83,84) der zweiten Koppelstufe (B) mit den zuvor vorhandenen Koppelvielfachen (A1,...,A4) der ersten Koppelstufe (A) ebenfalls jeweils über e Gruppen von Duplexzwischenleitungen (13V23) verbinden, deren Anschlußlagen (3;2) in den durch sie miteinander verbundenen Koppelvielfachen (A1;B3) den Anschlußlagen (3;2) gleich sind, die die nicht zwischen zuvor vorhandenen Koppelvielfachen verbliebenen Duplexzwischenleitungen (13V21) in den durch diese miteinander im vorherigen Teilausbauzustand verbundenen Koppelvielfachen (A1;B1) hatten, und die in entsprechender Weise durch die hinzugefügten Koppelvielfache (B3,B4) der zweiten Koppelstufe (B) mit hinzukommenden Koppelvielfachen (A5,...,A8) der ersten Koppelstufe (A) verbindende Duplexzwischenleitungen (..Y.3,..Y.4) aufgefüllt werden,

    und daß in jedem Koppelvielfach (B1,...) der zweiten Koppelstufe (B) für jede bei einer Erweiterung der Koppelanordnung andauernde Verbindung nur Duplexzwischenleitungen (11X11,41X71; 13V21, 43V81) einundderselben Gruppe (X oder V) von Duplexzwischenleitungen belegt werden.

2.  Zweistufige, zumindest gedoppelte ATM-self-routing-Umkehr-Koppelanordnung mit (2nx2n)-Koppelvielfachen, nach Anspruch 1,

    **dadurch gekennzeichnet,**

    daß in jedem Koppelvielfach (B1,...) der zweiten Koppelstufe (B) für die einzelnen Verbindungen jeweils nur Duplexzwischenleitungen (11X11,41X71; 13V21, 43V81) einundderselben Gruppe (X oder V) von Duplexzwischenleitungen belegt werden.

3. Verfahren zur Erweiterung einer zweistufigen, zumindest gedoppelten ATM-Umkehr-Koppelanordnung nach Anspruch 1 oder 2,
**dadurch gekennzeichnet,**
daß zunächst die eine (Redundanz-)Ebene der gedoppelten Koppelanordnung außer Betrieb genommen und durch Hinzufügen von $(\frac{b}{e} - \frac{b}{t})$ Koppelvielfachen (B3,B4) in der zweiten Koppelstufe (B) und Verbinden jedes hinzugefügten Koppelvielfachs (B3,B4) der zweiten Koppelstufe (B) mit jedem Koppelvielfach (A1,...A8) der ersten Koppelstufe (A) über jeweils wenigstens eine Duplexzwischenleitung wenigstens einer Gruppe (X+U, V+Y) von Duplexzwischenleitungen (13V23),

deren Anschlußlagen (3;2) in den durch sie miteinander verbundenen Koppelvielfachen (A1;B3) den Anschlußlagen (3;2) der bei der Erweiterung nicht zwischen zuvor vorhandenen Koppelvielfachen (A1;B1) verbleibenden Duplexzwischenleitungen (13V21) in den durch diese im vorherigen Teilausbauzustand miteinander verbundenen Koppelvielfachen (Al;Bl) gleich sind,

erweitert wird und daß nach ihrer Wiederinbetriebnahme die gleichen Vorgänge bei der (den) anderen (Redundanz-)Ebene(n) der Koppelanordnung durchgeführt werden.


## Claims

1. Two-stage, at least duplicated ATM self-routing revertive switching arrangement having (2nx2n) switching matrixes, in which each switching matrix (A1,...) of the first switching stage (A), comprising a switching matrixes in the maximum configuration of the switching arrangement, can be connected to p input/output ports and to z duplex links (where p + z = 2n), and each switching matrix (B1,...) of the second switching stage (B) can be connected to 2n duplex links,
each switching matrix (B1,...) of the second switching stage (B), comprising b switching matrixes in the maximum configuration of the switching arrangement, being connected via at least one duplex link (11X11,...) to each switching matrix (A1,...) of the first switching stage (A),
characterized in that if each switching matrix (B1,...) of the second switching stage (B) is connected to $2^k$ groups (X;V) of duplex links (11X11,...) (where k = ...,2,1,0), each switching matrix (B1,...) of the second switching stage (B) is connected to each switching matrix (A1,..) of the first switching stage (A) via in each case at least one duplex link (11X11;13V21) of each of said $2^k$ groups (X;V) of duplex links,
in that, with a partial configuration of the switching arrangement, the second switching stage (B) has only $\frac{b}{t}$ switching matrixes (B1;B2) (where t = $2^j$ and j = ...,2,1) which are connected to each of a maximum of $\frac{a}{t}$ switching matrixes (A1,...A4) of the first switching stage (A) in each case via t groups (X;V) of duplex links, of which, when the switching arrangement is extended to $\frac{b}{e}$ switching matrixes (B1,...,B4) in the second switching stage (B) and a maximum of $\frac{a}{e}$ switching matrixes (A1,...A8) in the first switching stage (A),
in each case only e groups (X+U) of duplex links (where e = $2^i$ and i = ...,2,1,0; i<j) remain between the previously present switching matrixes (A1,...., A4; B1,B2), which groups are filled by duplex links (..U.1,..U.2) connecting previously present switching matrixes (B1, B2) of the second switching stage (B) to additional switching matrixes (A5,..., A8) of the first switching stage (A),
and further t-e groups (V+Y) connect the added switching matrixes (B3,B4) of the second switching stage (B) to the previously present switching matrixes (A1,...,A4) of the first switching stage (A) likewise in each case via e groups of duplex links (13V23), whose connection positions (3;2) in the switching matrixes (A1;B3) interconnected by them are the same as the connection positions (3;2) which the duplex links (13V21) not remaining between previously present switching matrixes had in the switching matrixes (A1;B1) interconnected by them in the previous partial configuration state, and which are filled analogously by duplex links (..Y.3, ..Y.4) connecting added switching matrixes (B3,B4) of the second switching stage (B) to additional switching matrixes (A5,...,A8) of the first switching stage (A),
and in that only duplex links (11X11,41X71; 13V21, 43V81) of one and the same group (X or V) of duplex links are occupied in each switching matrix (B1,...) of the second switching stage (B) for each continuing connection when the switching arrangement is extended.

2. Two-stage, at least duplicated ATM self-routing revertive switching arrangement having (2nx2n) switching matrixes according to Claim 1, characterized in that in each case only duplex links (11X11,41X71; 13V21, 43V81) of one and the same group (X or V) of duplex links are occupied in each switching matrix (B1,...) of the second switching stage (B) for the individual connections.

3. Method for extending a two-stage, at least duplicated ATM revertive switching arrangement according to Claim 1 or 2, characterized
in that firstly the one (redundant) level of the duplicated switching arrangement is taken out of operation and is extended by adding $(\frac{b}{e} - \frac{b}{t})$ switching matrixes (B3,B4) in the second switching stage (B) and connecting each added switching matrix (B3,B4) of the second switching stage (B) to each switching matrix (A1,...A8) of the first switching stage (A) via in each case at least one duplex link of at least one group (X+U, V+Y) of duplex links (13V23),
whose connection positions (3;2) in the switching matrixes (A1;B3) interconnected by them are the same as the connection positions (3;2) of the duplex links (13V21) not remaining between previously present switching matrixes (A1;B1) after the extension in the switching matrixes (A1;B1) interconnected by them in the previous partial configuration state,
and in that after it has been put back into operation the same procedures are carried out for the other redundant level(s) of the switching arrangement.

**Revendications**

1. Réseau de connexion ATM à autoacheminement à rebroussement à deux étages, prévu au moins en double et comportant (2nx2n) matrices de commutation,
dans lequel chaque matrice de commutation (A1,...) du premier étage de connexion (A), qui comporte a matrices de commutation lorsque le montage du réseau de connexion est complet, peut être raccordée à p ports d'entrée/sortie et à z lignes intermédiaire duplex (avec p+z = 2n) et chaque matrice de commutation (B1,...) du second étage de connexion (B) peut être raccordée à 2n lignes intermédiaires duplex, et
dans lequel chaque matrice de commutation (B1,...) du second étage de connexion (B), qui comporte b matrices de commutation lorsque le montage du réseau de connexion est complet, est reliée par l'intermédiaire d'au moins une ligne intermédiaire duplex (11X11,...) à chaque matrice de commutation (A1,...) du premier étage de connexion (A),
caractérisé par le fait
que lorsque chaque matrice de commutation (B1,...) du second étage de connexion (B) est raccordée à $2^k$ groupes (X; V) de lignes intermédiaires duplex (11X11,...) (avec k=...,2,1,0), chaque matrice de commutation (B1,...) du second étage de connexion (B) est reliée à chaque matrice de commutation (A1, ...) du premier étage de connexion (A) par l'intermédiaire d'au moins une ligne intermédiaire duplex (11X11; 13V31B) de chacun de ces $2^k$ groupes (X;V) de lignes intermédiaires duplex,
que, lorsque le montage du réseau de connexion est partiel, le second étage de connexion (B) ne comporte que b/t matrices de commutation (B1; B2) (avec t = $2^j$ et j = ...,2, 1), qui sont reliées à chacune des matrices de commutation d'au maximum a/t matrices de commutation (A1,...,A4) du premier étage de connexion (A) par l'intermédiaire de t groupes (X;V) de lignes intermédiaires duplex, parmi lesquelles, dans le cas d'une extension du réseau de connexion à b/e matrices de commutation (B1,... B4) dans le second étage de connexion (B) et à au maximum a/e matrices de commutation (A1,... A8) dans le premier étage (A) de connexion,
entre les matrices de commutation (A1, ...A4; B1,B2) présentes auparavant ne subsistent que e groupes (X+U) de lignes intermédiaires (avec e=$2^i$ et i = ...2,1,0; i < j), qui sont munies de lignes intermédiaires duplex (.. U.1,..U.2), qui relient les matrices de commutation (B1,B2), présentes auparavant, du second étage de connexion (B) à des matrices de commutation (A5,...,A8), qui s'ajoutent, du premier étage de connexion (A), et
t-e autres groupes (V+Y) relient les matrices de commutation ajoutées (B3,B4), du second étage de connexion (B) aux matrices de connexion (A1,...,A4), qui étaient présents auparavant, du premier étage de connexion (A), également par l'intermédiaire de e groupes de lignes intermédiaires duplex (13V23), dont les positions de raccordement (3;2) dans les matrices de commutation (A1;B3), reliées l'une à l'autre par ces lignes, sont identiques aux positions de raccordement (3;2), qu'avaient les lignes intermédiaires duplex (13V21), qui n'étaient pas entre des matrices de commutation présentes auparavant, dans les matrices de commutation (A1;B1) reliées l'une à l'autre par ces lignes dans l'état de montage partiel précédent, et qui sont munies de façon adéquate de lignes intermédiaires duplex (..Y.3,..Y.4) reliant les matrices de commutation ajoutées (B3,B4) du second étage de connexion (B) à des matrices de commutation ajoutées (A5,..A8), du premier étage de connexion (A), et
dans chaque matrice de commutation (B1,...) de l'étage de connexion (B) seules des lignes intermédiaires duplex (11X11, 41X71;13V21,43V81) d'un même groupe (X ou V) de lignes intermédiaires duplex sont réservées à chaque liaison persistant lors d'une extension du réseau de connexion.

2. Réseau de connexion ATM à autoacheminement à deux étages, prévu au moins en double et comportant (2nx2n) matrices de commutation suivant la revendication 1,
caractérisé par le fait

que dans chaque matrice de commutation (B1,...) du second étage de connexion (B), seules des lignes intermédiaires duplex (11X11, 41X71;13V21,43V81) d'un même groupe (X ou V) de lignes intermédiaires duplex sont réservées aux diverses liaisons.

3. Procédé d'extension d'un réseau de connexion ATM à rebroussement à deux étages, prévu au moins en double, suivant la revendication 1 ou 2, caractérisé par le fait qu'on met d'abord hors service un des plans (de redondance) du réseau de connexion en double
on l'augmente par adjonction de $(\frac{b}{e} - \frac{b}{t})$ matrices de commutation (B3,B4) dans le second étage de connexion (B) et par raccordement de chaque matrice de commutation ajoutée (B3,B4) du second étage de connexion (B) avec chaque matrice de commutation (A1,...A8) du premier étage de connexion (A) par au moins une ligne intermédiaire duplex d'au moins un groupe (X+U, V+Y) de lignes intermédiaires duplex (13V23),

dont les positions de raccordement (3;2) dans les matrices de commutation (A1;B3), reliées l'une à l'autre par ces lignes, sont identiques aux positions de raccordement (3;2) des lignes intermédiaires duplex (13V21) qui, lors de l'extension, ne subsistent pas entre des matrices de commutation présentes auparavant, dans les matrices de commutation (A1;B1) reliées l'une à l'autre par ces lignes dans l'état de montage partiel précédent, et qu'après remise en service du plan du réseau de connexion, on effectue les mêmes opérations pour le ou les autres plans (de redondance) du réseau de connexion.

FIG1

FIG4

FIG5

FIG6

# FIG 2

# FIG 3